# EUROPÄISCHE PATENTSCHRIFT

(11) **EP 1 027 816 B1**
(45) Veröffentlichungstag und Bekanntmachung des Hinweises auf die Patenterteilung: **04.08.2004**
(21) Anmeldenummer: 98954428.3
(22) Anmeldetag: 16.10.1998
(51) Int. Cl.: H04Q 11/04, H04N 7/14

(54) **VERFAHREN UND VORRICHTUNG ZUM AUFBAUEN WENIGSTENS EINER VERBINDUNG MIT NIEDRIGER PRIORITÄT IN EINEM TELEKOMMUNIKATIONSNETZ**
METHOD AND DEVICE FOR ESTABLISHING AT LEAST ONE LOW PRIORITY CONNECTION IN A TELECOMMUNICATIONS NETWORK
PROCEDE ET DISPOSITIF PERMETTANT D'ETABLIR AU MOINS UNE LIAISON A FAIBLE PRIORITE DANS UN RESEAU DE TELECOMMUNICATIONS

(30) Priorität: 28.10.1997 DE 19747605
(43) Veröffentlichungstag der Anmeldung: 16.08.2000
(73) Patentinhaber: Deutsche Telekom AG, 53113 Bonn (DE)
(72) Erfinder: PETER, Erhard, D-64807 Dieburg (DE)
(86) Internationale Anmeldenummer: PCT/EP1998/006577
(87) Internationale Veröffentlichungsnummer: WO 1999/022487

(56) Entgegenhaltungen:
- EP-A- 0 629 065
- DE-A- 19 545 489
- US-A- 5 140 417
- US-A- 5 229 992
- US-A- 5 463 629
- US-A- 5 673 253

## Beschreibung

Die Erfindung betrifft ein Verfahren zum Aufbauen wenigstens einer Verbindung in einem Telekommunikationsnetz, wobei wenigstens einem Teil der Verbindung eine niedrige Priorität zugewiesen wird, gemäß Anspruch 1 sowie eine Vorrichtung zur prioritätsbezogenen Steuerung eines Verbindungsaufbaus in einem Telekommunikationsnetz gemäß Anspruch 8.

Bei der Entwicklung von Telekommunikationsnetzen spielt die statistische Ermittlung der mittleren Verkehrsauslastung des Netzes, d. h. die Angabe, wie viele Teilnehmer im Mittel gleichzeitig einen Verbindungsaufbau wünschen, eine entscheidende Rolle. In Abhängigkeit der ermittelten Verkehrsauslastung werden die Leistungsfähigkeit der Vermittlungsknoten als auch die Anzahl von Verbindungseinrichtungen, wie z. B. Leitungen oder Kanälen, festgelegt. Da das Verkehrsaufkommen eines Telekommunikationsnetzes tageszeitabhängigen Schwankungen unterworfen ist, gibt es Zeiten, zu denen das Netz kaum oder nur gering belastet ist. Die Netzbetreiber sind aus Kostengründen natürlich daran interessiert, eine möglichst hohe Auslastung ihres Telekommunikationsnetzes zu erzielen. Eine bereits seit langem angewandte Strategie besteht darin, zeit- und entfernungsabhängige Tarifstrukturen anzubieten.

Ein Nachteil solcher Tarifierungsstrategien liegt darin, daß sie relativ statisch sind und auf beliebige Schwankungen des Verkehrsaufkommens in dem Telekommunikationsnetz nicht reagieren können.

Aus der DE-OS 195 45 489 ist ein Verfahren bekannt, mit der die Auslastung der Anschlußleitungen zwischen Kommunikationsteilnehmern und den ihnen zugeordneten Vermittlungsknoten verbessert werden kann. Das bekannte Verfahren beruht darauf, daß über die Teilnehmeranschlußleitung ein Dienst, insbesondere eine Multimediaanwendung mit einer niedrigen Priorität übertragen werden kann. Sobald jedoch eine Nicht-Multimediaanwendung, d. h. eine Anwendung mit einer höheren Priorität, wie z. B. eine Sprachübertragung, ankommt oder abgeht, wird die Multimediaanwendung mit niedriger Priorität unterbrochen oder beendet. Allerdings ist das bekannte Verfahren nur geeignet, die Auslastung des Anschlußleitungsnetzes zu optimieren, d. h. das Verfahren ist auf den lokalen Anschlußbereich beschränkt.

In US-A-5 463 629 werden ein Verfahren und eine Vorrichtung zur dynamischen Kanalzuordnung für ein digitales dienstintegriertes Netz beschrieben, wobei B-Kanäle zwischen den Kommunikationspartnern in Abhängigkeit vorbestimmter Prioritäten und verschiedener Echtzeitereignisse dynamisch zugewiesen werden. Bei Anforderung eines Verbindungsaufbaus wird zunächst die Priorität der Kanalnutzung, die mit dem Benutzers zusammenhängt, geprüft. Wenn für belegte Kanäle eine Vorreservierung für Benutzer mit höherer Priorität gegeben ist, wird ein durch einen Benutzer mit niedrigerer Priorität belegter Kanal ausgelöst, der die Bedingung für die Vorreservierung erfüllt. Dem anfragenden Benutzer höherer Priorität wird dann dieser Kanal zur Verfügung gestellt. Die Zuweisung einer Verbindung niedriger Priorität an zwei Teilnehmer erfolgt dabei ausschließlich unter der Bedingung, daß zwischen den Teilnehmern bereits eine Verbindung besteht und diese wenigstens teilweise eine höhere Priorität hat.

Der Erfindung liegt daher die Aufgabe zugrunde, ein Verfahren und eine Vorrichtung zur Verfügung zu stellen, mit denen die Auslastung eines Telekommunikationsnetzes verbessert werden kann, indem preisgünstige Verbindungen in Abhängigkeit des dynamischen Netzzustandes aufgebaut werden können.

Dieses technische Problem löst die Erfindung zum einen mit den Verfahrensschritten des Anspruchs 1.

Der Kerngedanke der Erfindung ist darin zu sehen, in einem Telekommunikationsnetz unter vorbestimmten Bedingungen Verbindungen mit einer niedrigen Priorität, d. h. mit kostengünstigeren Tarifen, aufbauen zu können. Dadurch kann das Telekommunikationsnetz effizienter ausgelastet werden als bisher. einem, das Telekommunikationsnetz überwachenden intelligenten Netz gespeichert. Bei einem Verbindungsaufbauversuch eines Teilnehmers wird der Aufbau wenigstens einer ersten Verbindung zwischen jeweils einem ersten und einem zweiten Kommunikationsteilnehmer eingeleitet. Bereits an dieser Stelle sei erwähnt, daß erfindungsgemäß unter dem Begriff Kommunikationsteilnehmer entweder eine einzelne Endeinrichtung, wie z. B. ein Bildtelefon oder eine beim Kunden installierte Telekommunikationsanlage, auch TK-Anlage genannt, verstanden wird. In Abhängigkeit von den Netz- und/oder Teilnehmerzustandsdaten wird wenigstens ein Teil einer ersten Verbindung mit einer niedrigen Priorität aufgebaut oder der Verbindungsaufbau wird ganz oder teilweise abgebrochen. An dieser Stelle sei bereits erwähnt, daß mit dem Ausdruck "wenigstens ein Teil der ersten Verbindung" zum Ausdruck gebracht werden soll, daß die Verbindung entweder eine einzelne Leitung oder einen einzelnen Kanal oder aber mehrere Kanäle oder mehrere Pakete bzw. Zellen umfassen kann. Wenn die erste Verbindung zwischen dem ersten und zweiten Kommunikationsteilnehmer aufgebaut worden ist, wird die niedrige Priorität der ersten Verbindung oder die niedrige Priorität eines Teils der ersten Verbindung gespeichert. Danach werden die Daten wenigstens über den Teil der ersten Verbindung mit niedriger Priorität zum vorbestimmten Kommunikationsteilnehmer übertragen. Ein Vorteil der Erfindung ist, wie bereits erwähnt, darin zu sehen, daß in Abhängigkeit von den Netz- und/oder Teilnehmerzustandsdaten kostengünstige Verbindung aufgebaut werden können, wodurch das Telekommunikationsnetz effizienter als bisher ausgelastet werden kann.

Zweckmäßigerweise enthalten die Teilnehmerzustandsdaten beispielsweise Rufnummern mit verschiedenen Prioritäten, wobei Verbindungen zu oder von einer solchen Rufnummer mit der dieser Rufnummer zugeordneten Priorität aufgebaut werden kann. Dies bietet sich insbesondere dann an, wenn einem Kommunikationsteilnehmer mehrere Rufnummern zugeordnet sind. So ist es denkbar, nur bestimmten von mehreren Rufnummern, die einem Teilnehmer zugeordnet sind, eine niedrige Priorität zuzuordnen, mit der kostengünstige Verbindungen aufgebaut werden können.

Die Netzzustandsdaten enthalten beispielsweise Nutzungszeiten, die Zeitfenstern (z. B. 13.00 bis 18.00 an Sonntagen und 18.00 bis 22.00 an allen übrigen Tagen) entsprechen, in denen Verbindungen mit niedriger Priorität vom Netzbetreiber zugelassen werden.

Die Netzzustandsdaten können auch Grenz- oder Schwellenwerte enthalten, die ein Maß für die Auslastung der Fernebene oder der Vermittlungsknoten des Telekommunikationsnetzes darstellen. In diesem Fall kann eine Verbindung oder Teile einer Verbindung nur mit einer niedrigen Priorität aufgebaut werden, wenn der Schwellenwert (z. B. eine Verkehrsauslastung von 70 %) nicht überschritten wird. Sobald der Schwellenwert überschritten wird, d. h. die Fernebene oder ein oder mehrere Vermittlungsknoten sind überlastet, wird wenigstens der Teil der aufgebauten ersten Verbindung mit niedriger Priorität abgebaut und neue Verbindungsaufbauversuche von Verbindungen mit wenigstens einem Teil mit niedriger Priorität abgebrochen. Natürlich kann der Schwellenwert auch auf 100 % gesetzt werden, so daß zunächst unabhängig von der Priorität einer Verbindung jede gewünschte Verbindung aufgebaut wird. Allerdings werden bei Überlastung des Telekommunikationsnetzes immer so viele Verbindungen (Kanäle oder Pakete) mit niedriger Priorität ausgelöst wie Verbindungen mit höherer Priorität gewünscht werden.

An dieser Stelle sei erwähnt, daß vor einem Verbindungsaufbau ein Kunde an seinem Endgeräc den Grad der Priorität für eine gewünschte Verbindung frei wählen kann oder daß die Priorität durch das Telekommunikationsnetz oder beispielsweise ein intelligentes Netz vorgegeben wird.

Eine weitere Strategie, Verbindungen wenigstens teilweise mit einer niedrigen Priorität zuzulassen, verlangt, daß zwischen den jeweiligen Kommunikationsteilnehmern bereits eine Verbindung mit höherer Priorität besteht. Dazu wird zunächst geprüft, ob zwischen dem ersten und zweiten Kommunikationsteilnehmer eine Verbindung besteht. Nur wenn die bestehende Verbindung eine höhere Priorität aufweist, kann eine Verbindung wenigstens teilweise mit einer niedrigen Priorität aufgebaut werden.

Das Telekommunikationsnetz kann sowohl ein analoges als auch ein digitales Netz sein. Als digitales Netz ist insbesondere ein ISDN-Netz vorgesehen, in dem jede Verbindung mehrere Nutz- und/oder Steuerkanäle umfaßt. Dabei wird wenigstens einem Kanal eine höhere und wenigstens einem anderen Kanal eine niedrige Priorität zugewiesen wird. Auf diese Weise ist es möglich, eine Bildtelefonanwendung über die zwei B-Kanäle eines ISDN-Basisanschlusses aufzubauen, wobei beispielsweise der B1-Kanal die höhere Priorität und der B2-Kanal die niedrige Priorität erhält.

Als digitales Netz können auch paketvermittlende Netze verwendet werden, insbesondere ein ATM-Netz (ATM von Asynchronous Transfer Modus), in dem jede Verbindung mit mehreren Paketen oder Zellen belegt wird, von denen vorbestimmte Pakete bzw. Zellen höhere und die anderen niedrige Prioritäten aufweisen können.

In den letztgenannten Fällen wird bei einer Überlastung des Telekommunikationsnetzes oder aufgrund anderer Netzund/oder Teilnehmerzustandsdaten nicht die Verbindung vollständig abgebaut, sondern es werden nur die Kanäle mit niedrigen Prioritäten getrennt bzw. die Pakete oder Zellen mit niedrigen Prioritäten verworfen. Die Kanäle mit höheren Prioritäten bzw. die Pakete oder Zellen mit höheren Prioritäten bleiben bestehen.

Die Erfindung wird außerdem mit den Merkmalen des Anspruchs 9 gelöst.

Die erfindungsgemäße Vorrichtung umfaßt eine erste Speichereinrichtung zum Ablegen von Netz- und/oder Teilnehmerzustandsdaten, insbesondere von Nutzzeiten und Auslastungsparametern des Netzes sowie den Rufnummern eines Teilnehmers zugeordneten Prioritäten, und eine zweite Speichereinrichtung zum Ablegen der Prioritäten aufgebauter Verbindungen. Eine programmierbare Steuereinheit ist vorgesehen, die unter Ansprechen auf die Necz- und/oder Teilnehmerzustandsdaten eine Verbindung zwischen zwei Kommunikationsteilnehmern wenigstens teilweise mit einer niedrigen Priorität aufbauen kann.

Weitere vorteilhafte Ausführungsbeispiele sind in den Unteransprüchen umschrieben.

Die Erfindung wird nachfolgend anhand der Ausführungsbeispiele in Verbindung mit den beiliegenden Zeichnungen näher erläutert.

Darin zeigen:
- Fig. 1: eine aufgebaute Verbindung innerhalb eines ISDN-Netzes zwischen zwei Kommunikationsteilnehmern und
- Fig. 2: eine Verbindung zwischen zwei Kommunikationsteilnehmern, die jeweils als TK-Anlage implementiert sind.

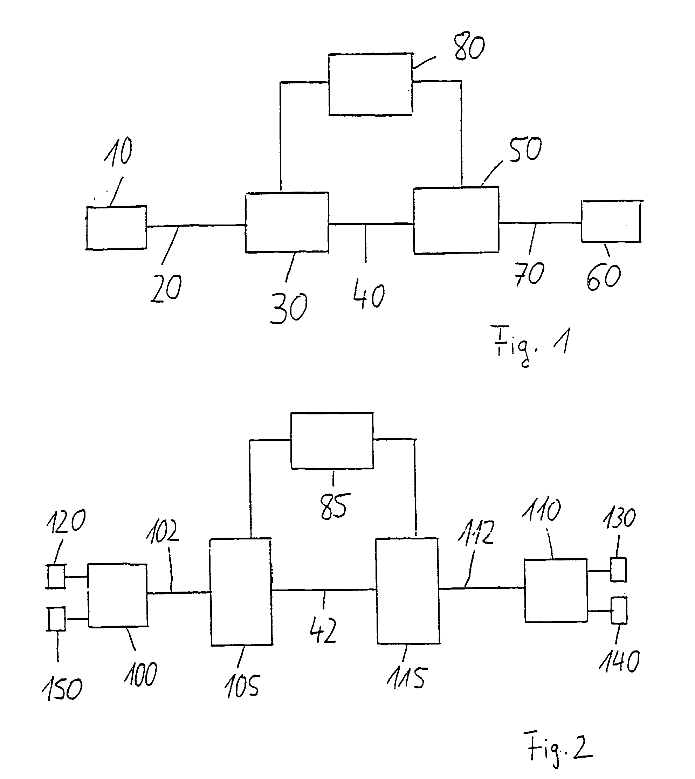

Als ein Beispiel für viele Anwendungsmöglichkeiten einer prioritätsabhängigen Steuerung eines Verbindungsaufbaus wird zunächst das Bildtelefon beschrieben. In Fig. 1 ist hierzu ausschnittsweise ein ISDN-Netz dargestellt. Im einzelnen ist bei einem ersten rufenden Kunden ein Bildtelefon 10 implementiert, das beispielsweise an einem zwei B-Kanäle und einen D-Kanal aufweisenden ISDN-Basisanschluß angeschaltet. Über eine Teilnehmeranschlußleitung 20 ist das Bildtelefon 10 mit einer zugehörenden Vermittlungsstelle 30 des ISDN-Netzes verbunden. Die Vermittlungsstelle 30 ist über die Fernebene 40 mit einer Vermittlungsstelle 50 verbunden, die über eine Teilnehmeranschlußleitung 70 mit einem gerufenen Bildtelefon 60 verbunden ist. Der Aufbau des Bildtelefons 10 ist allgemein bekannt und wird daher nicht weiter erläutert. Bei der Bildtelefonverbindung über einen ISDN-Basisanschluß werden zwei Arten unterschieden: Eine Verbindung kann lediglich über einen B-Kanal mit 64 kbit/s oder über beide B-Kanäle mit zweimal 64 kbit/s übertragen werden. In beiden Fällen überträgt der erste B-Kanal die Sprach- sowie einen Teil der Videoinformation. Der zweite B-Kanal wird ausschließlich für die Videoinformation zur Verfügung gestellt. Da über den ersten B-Kanal neben der Bildinformation auch die Sprachinformation übertragen wird, ist dieser Kanal wichtiger als der zweite B-Kanal, über den lediglich ein Teil der Videoinformation übertragen wird. Deshalb wird, wie weiter unten noch ausführlich erläutert wird, dem ersten B-Kanal eine höhere Priorität als dem zweiten Kanal zugewiesen. Diese Zuordnung übernimmt beispielsweise ein intelligentes Netz 80, das ferner das Telekommunikationsnetz überwacht und steuert. In dem intelligenten Netz 80 sind Netz- und/oder Teilnehmerzustandsdaten abgespeichert, die von einer nicht dargestellten programmierbaren Steuereinrichtung verwendet werden, um den Verbindungsaufbau zwischen den Bildtelefonen 10 und 60 zu steuern und bestehende Verbindungen zu überwachen.

Nachfolgend wird die Funktionsweise der in Fig. 1 dargestellten Telekommunikationsverbindung näher erläutert.

Es sei zunächst angenommen, daß der Kunde am Bildtelefon 10 eine Bildtelefonverbindung mit unterschiedlichen Prioritäten zu dem Bildtelefon 60 aufbauen möchte. Dazu wählt der Kunde die zu dem Bildtelefon 60 gehörenden Rufnummern und/oder eine Kennung für die unterschiedlichen Prioritäten. Unter Ansprechen auf die gewählte Rufnummer wird eine Verbindung über die Anschlußleitung 20, den Vermittlungsknoten 30, die Fernverbindung 40, den Vermittlungsknoten 50 und die Anschlußleitung 70 zum Bildtelefon 60 aufgebaut. Die programmierbare Steuereinrichtung in dem intelligenten Netz 80 ist beispielsweise derart programmiert, daß sie dem ersten B-Kanal eine höhere Priorität und dem zweiten B-Kanal eine niedrige Priorität zuordnet und diese Zuordnungen in einem nicht dargestellten Speicher ablegt. Wie bereits eingangs erwähnt, kann die Zuordnung der Priorität zu einer oder mehreren Verbindungen von dem Kunden an seinem Endgerät selbst vorgenommen werden. Es sei ferner angenommen, daß die Verbindung zwischen dem Bildtelefon 10 und dem Bildtelefon 60 bereits hergestellt ist. In einer dem intelligenten Netz 80 zugeordneten Speichereinrichtung sind Netzzustandsdaten abgespeichert, die in unserem Beispiel einen Schwellenwert für die Auslastung des Telekommunikationsnetzes, insbesondere der Fernebene 40 und der beiden Vermittlungsknoten 30 und 50 enthalten. Der Schwellenwert betrage beispielsweise 70 %. Das bedeutet, daß, solange das Telekommunikationsnetz nicht zu 70 % ausgelastet ist, eine Verbindung wenigstens teilweise mit niedriger Priorität zwischen dem Bildtelefon 10 und dem Bildtelefon 60 aufgebaut werden kann. Wie bereits erwähnt, besteht zwischen den beiden Bildtelefonen 10 und 60 eine Verbindung, die mit dem ersten B-Kanal höherer Priorität und dem zweiten B-Kanal niedriger Priorität belegt ist. Es sei nunmehr angenommen, daß während der bestehenden Verbindung zwischen den Bildtelefonen 10 und 60 die Auslastung des ISDN-Netzes 80 % erreicht und damit den Schwellenwert von 70 % überschreitet. Unter Ansprechen auf die Überschreitung des Schwellenwertes veranlaßt die programmierbare Steuereinrichtung des intelligenten Netzes 80 die Vermittlungsstelle 30 und/oder 50, den zweiten B-Kanal mit niedriger Priorität der Verbindung auszulösen. Die Verbindung bleibt allerdings über den ersten B-Kanal mit höherer Priorität bestehen, so daß die Kunden der Bildtelefonübertragung nach wie vor mit gleich hoher Sprachqualität aber mit verringerter Bildqualität kommunizieren können, da lediglich nur ein Teil der Video information über den ersten B-Kanal übertragen wird. In vorteilhafter Weise kann die programmierbare Steuereinrichtung des intelligenten Netzes 80 den zweiten B-Kanal mit niedriger Priorität automatisch wieder aufbauen, sobald die Verkehrsauslastung des ISDN-Netzes unter den Schwellenwert von 70 % fällt.
Eine weitere Ausführungsform sieht vor, daß in dem Speicher des intelligenten Netzes 80 die Nutzzeiten des ISDN-Netzes abgelegt sein können. Nur während dieser Nutzzeiten können Verbindungen wenigstens teilweise mit niedriger Priorität aufgebaut werden können. Dies bedeutet, daß zwischen den Bildtelefonen 10 und 60 außerhalb der Nutzungszeiten lediglich der erste B-Kanal mit höherer Priorität aufgebaut werden kann, während der zweite B-Kanal für eine separate Verbindung mit höherer Priorität reserviert bleibt. Auch in diesem Fall ist es denkbar, daß die programmierbare Steuereinrichtung des intelligenten Netzes 80 automatisch den zweiten B-Kanal mit niedriger Priorität wieder aufbaut, wenn die bestehende Verbindung in das vorbestimmte Nutzzeitenintervall fällt, oder den zweiten B-Kanal abbaut, wenn die bestehende Verbindung das Nutzzeitenintervall überschreitet.

In Fig. 2 ist wiederum ein Abschnitt eines ISDN-Netzes dargestellt. Allerdings werden bei dieser beispielhaften Ausführungsform keine Bildtelefone wie in Fig. 1, sondern Telekommunikationsanlagen 100 und 110 als Kommunikationsteilnehmer verwendet. An die Telekommunikationsanlage 100 sind Endgeräte 120, 150 und an die TK-Anlage 110 Endgeräte 130 und 140 angeschaltet. Die TK-Anlage 100 ist über eine Anschlußleitung 102 mit einer Vermittlungsstelle 105 verbunden, wohingegen die TK-Anlage 110 über eine Anschlußleitung 112 mit einer Vermittlungsstelle 115 verbunden ist. Das in Fig. 2 dargestellte ISDN-Netz wird wiederum über ein intelligentes Netz 85 gesteuert und überwacht, obwohl die erfindungsgemäße Steuerung auch von den Vermittlungsknoten 105 und/oder 115 oder einer zentralen Datenbank aus erfolgen kann. Die programmierbare Steuereinrichtung des intelligenten Netzes 85 ist beispielsweise derart programmiert, daß eine Verbindung mit niedriger Priorität zwischen der TK-Anlage 100 und der TK-Anlage 110 nur aufgebaut werden kann, wenn bereits zuvor zwischen den beiden TK-Anlagen 100 und 110 eine Verbindung mit höherer Priorität aufgebaut worden ist. Es sei angenommen, daß das an der TK-Anlage 100 angeschaltete Endgerät 120 mit dem an der TK-Anlage 110 angeschalteten Endgerät 130 über eine Verbindung mit einer höheren Priorität kommuniziert. Diese Verbindung und die zugeordnete Priorität werden in einem Speicher des intelligenten Netzes 85 abgelegt. Nunmehr soll eine weitere Verbindung zwischen dem an der TK-Anlage 110 angeschalteten Endgerät 140 und dem an der TK-Anlage 100 angeschalteten Endgerät 150 aufgebaut werden. Dazu gibt ein Kunde an dem Endgerät 140 die Zielrufnummer des Endgeräts 150 ein. Die programmierbare Steuereinrichtung des intelligenten Netzes 85 liest die eingegebene Rufnummer und stellt fest, daß zwischen den beiden Telekommunikationseinrichtungen 100 und 110 bereits eine Verbindung mit höherer Priorität besteht. Daraufhin ermöglicht die programmierbare Steuereinrichtung einen Verbindungsaufbau zwischen dem Endgerät 140 und dem Endgerät 150 über eine Verbindung mit niedriger Priorität, die vom Netzbetreiber kostengünstiger angeboten wird. Es versteht sich, daß die oben beschriebene prioritätsbezogene Steuerung eines Verbindungsaufbaus nicht nur von einer sondern auch von mehreren Teilnehmer- und Netzzustandsinformationen abhängen kann, die untereinander unterschiedlich gewichtet sein können. So ist es denkbar, daß, obwohl zwischen den TK-Anlagen 100 und 110 eine Verbindung höherer Priorität bereits besteht, dennoch keine zweite Verbindung mit niedriger Priorität aufgebaut werden kann, da das ISDN-Netz bereits über 70 % ausgelastet ist.

Zahlreiche weitere Ausführungsbeispiele sind denkbar, in denen die Erfindung Verwendung finden kann. So ist es möglich, bei dem Dienstleistungsmerkmal Dreierkonferenz, die beispielsweise von dem Teilnehmer 120 eingeleitet wird, eine Verbindung mit höherer Priorität zu dem Teilnehmer 130 und eine zweite Verbindung mit niedriger Priorität zu einem dritten Teilnehmer, der an einer nicht dargestellten TK-Anlage eines anderen Unternehmens angeschaltet ist, aufzubauen. Wie bereits erwähnt, kann die erforderliche Steuerlogik in einem dem Telekommunikationsnetz zugeordneten intelligenten Netz, den Vermittlungsknoten oder einer separaten Datenbank angeordnet sein.

## Patentansprüche

1. Verfahren zum Aufbauen wenigstens einer zweiten Verbindung (20, 40, 50) in einem Telekommunikationsnetz, wobei wenigstens einem Teil der zweiten Verbindung eine niedrige Priorität zugewiesen wird, wobei wenigstens ein Teil einer Verbindung entweder eine Leitung, einen Kanal
oder mehrere Kanäle oder mehrere Pakete bzw. Zellen umfasst, mit folgenden Verfahrensschritten:
a) Speichern von Netz- und/oder Teilnehmerzustandsdaten,
b) Prüfen, ob zwischen einem ersten (10; 100) und einem zweiten Kommunikationsteilnehmer (60; 110) eine erste Verbindung mit einer wenigstens teilweise höheren Priorität besteht;
**dadurch gekennzeichnet, daß**
dann, wenn eine erste Verbindung aufgebaut worden ist, die wenigstens teilweise eine höhere Priorität aufweist, folgende Schritte durchgeführt werden:
c) Einleiten des Aufbaus wenigstens einer zweiten Verbindung (20, 40, 50) zwischen dem ersten (10; 100) und dem zweiten Kommunikationsteilnehmer (60; 110),
d) in Abhängigkeit von den Netz- und/oder Teilnehmerzustandsdaten wird wenigstens ein Teil der zweiten Verbindung (20, 40, 50) mit einer niedrigen Priorität aufgebaut oder der Verbindungsaufbau nach Schritt c) und Schritte e) und f) nicht ausgeführt, abgebrochen,
e) Speichern der der zweiten Verbindung zugeordneten niedrigen Priorität,
f) Übertragen von Daten wenigstens über den Teil der zweiten Verbindung (20, 40, 50) mit niedriger Priorität zum ersten und/oder zweiten Kommunikationsteilnehmer.

2. Verfahren nach Anspruch 1, **dadurch gekennzeichnet, daß** die Teilnehmerzustandsdaten Rufnummern mit verschiedenen Prioritäten enthalten und daß die den Rufnummern zugeordneten Verbindungen mit der jeweiligen Priorität aufgebaut werden können.

3. Verfahren nach Anspruch 1 oder 2, **dadurch gekennzeichnet, daß** die Netzzustandsdaten Nutzungszeiten enthalten und daß während der Nutzungszeiten wenigstens ein Teil der zweiten Verbindung mit einer niedrigen Priorität aufgebaut werden kann.

4. Verfahren nach einem der Ansprüche 1 bis 3, **dadurch gekennzeichnet, daß** die Netzzustandsdaten Schwellenwerte für die Auslastung der Fernebene (40) oder der Vermittlungsknoten (30, 50; 105, 115) des Telekommunikationsnetzes enthalten und daß wenigstens der Teil der aufgebauten zweiten Verbindungen mit niedriger Priorität abgebaut wird oder Verbindungsaufbauversuche von Verbindungen mit wenigstens einem Teil mit niedriger Priorität abgebrochen werden, wenn die Schwellenwerte überschritten werden.

5. Verfahren nach einem der Ansprüche 1 bis 4, **dadurch gekennzeichnet, daß** das Telekommunikationsnetz ein digitales Netz, insbesondere ein ISDN-Netz ist und jede Verbindung mehrere Nutz- und oder Steuerkanäle umfaßt, wobei wenigstens einem Kanal eine höhere und wenigsten einem anderen Kanal eine niedrige Priorität zugewiesen wird.

6. Verfahren nach einem der Ansprüche 1 bis 4, **dadurch gekennzeichnet, daß** das Telekommunikationsnetz ein digitales, paketvermittelndes Netz, insbesondere ein ATM-Netz ist und jede Verbindung mit mehreren Pakete oder Zellen belegt werden, von denen vorbestimmte Pakete oder Zellen höhere und die anderen niedrige Prioritäten aufweisen.

7. Verfahren nach einem der Ansprüche 1 bis 6, **dadurch gekennzeichnet, daß** die Netz- und/oder Teilnehmerzustandsdaten sowie die den Verbindungen zugeordneten Prioritäten in vorbestimmten Vermittlungsknoten, einer zentralen Datenbank und/oder einem intelligenten Netz abgespeichert werden.

8. Vorrichtung zur prioritätsbezogenen Steuerung eines Verbindungsaufbaus zum Einsatz in einem Telekommunikationsnetz, insbesondere zur Durchführung eines Verfahrens nach einem der Ansprüche 1 bis 7, welche
- eine erste Speichereinrichtung zum Ablegen von Netzund/oder Teilnehmerzustandsdaten, insbesondere von Nutzzeiten und Auslastungsparametern des Netzes sowie den Rufnummern eines Teilnehmers zugeordnete Prioritäten, und
- eine programmierbare Steuereinheit umfaßt,
**dadurch gekennzeichnet, dass**
- eine zweite Speichereinrichtung zum Ablegen der Prioritäten aufgebauter Verbindungen vorgesehen ist, und
- die programmierbare Steuereinheit unter Ansprechen auf die Netz- und/oder Teilnehmerzustandsdaten eine Verbindung (20, 40, 70; 102, 42, 112) zwischen zwei Kommunikationsteilnehmern (10, 60; 100, 110) wenigstens teilweise mit einer niedrigen Priorität aufbauen kann,
wobei die programmierbare Steuereinrichtung derart ausgebildet ist, daß diese vor dem Aufbau einer Verbindung mit niedriger Priorität zu einem Kommunikationsteilnehmer die zweite Speichereinrichtung abfragt, ob bereits eine Verbindung mit höherer Priorität zu demselben Kommunikationsteilnehmer besteht.

9. Vorrichtung nach Anspruch 8, **dadurch gekennzeichnet, daß** diese in vorbestimmten Vermittlungsknoten oder einem intelligenten Netz implementiert ist.

## Claims

1. Process for the set-up of at least one second connection (20, 40, 50) in a telecommunications network, at least a part of the second connection being assigned a low priority, at least a part of a connection comprising either a line, a channel or a plurality of channels or a plurality of packets or cells, with the following process steps:
a) storing of network and/or subscriber status data;
b) checking whether a first connection with an at least partially higher priority exists between a first (10; 100) and a second communication subscriber (60; 110);
**characterized in that**
if a first connection having at least in part a higher priority has been set up, the following steps are performed:
c) initiation of the set-up of at least one second connection (20, 40, 50) between the first (10; 100) and the second communication subscriber (60; 110);
d) depending on the network and/or subscriber status data, at least a part of the second connection (20, 40, 50) with a low priority is set up or the connection set-up according to step c) is discontinued, and steps e) and f) are not executed;
e) storing of the low priority associated with the second connection;
f) transmission of data at least over the part of the second connection (20, 40, 50) with low priority to the first and/or second communication subscriber.

2. Process according to claim 1, **characterized in that** the subscriber status data contain call numbers with different priorities and the connections associated with the call numbers can be set up with the respective priority.

3. Process according to claim 1 or 2, **characterized in that** the network status data contain use times and, during the use times, at least a part of the second connection with a low priority can be set up.

4. Process according to any one of claims 1 to 3, **characterized in that** the network status data contain threshold values for the capacity utilization of the long-distance level (40) or of the switching nodes (30, 50; 105, 115) of the telecommunications network and at least the part of the set-up second connections with low priority is cleared down or connection set-up attempts of connections with at least a part with low priority are discontinued if the threshold values are exceeded.

5. Process according to any one of claims 1 to 4, **characterized in that** the telecommunications network is a digital network, particularly an ISDN network, and each connection comprises a plurality of subscriber-information and/or control channels, at least one channel being assigned a higher priority and at least one other channel being assigned a low priority.

6. Process according to any one of claims 1 to 4, **characterized in that** the telecommunications network is a digital, packet-switching network, particularly an ATM network, and each connection carries a plurality of packets or cells, of which predetermined packets or cells have higher priorities and the others have low priorities.

7. Process according to any one of claims 1 to 6, **characterized in that** the network and/or subscriber status data as well as the priorities associated with the connections are stored in predetermined switching nodes, in a central database and/or in an intelligent network.

8. Device for the priority-based control of a connection set-up for use in a telecommunications network, particularly for the performance of a process according to any one of claims 1 to 7, wherein said device:
- comprises a first storage means for the storage of network and/or subscriber status data, particularly of use times and capacity utilization parameters of the network as well as priorities associated with the call numbers of a subscriber; and
- a programmable control unit;
**characterized in that**
- a second storage means is provided for the storage of the priorities of set-up connections; and
- the programmable control unit, responding to the network and/or subscriber status data, is capable of setting up a connection (20, 40, 70; 102, 42, 112) between two communication subscribers (10, 60; 100, 110) at least partially with a low priority, the programmable control means being so designed as to check, prior to set-up of a connection with low priority to a communication subscriber, with the second storage means whether a connection with a higher priority already exists to the same communication subscriber.

9. Device according to claim 8, **characterized in that** said device is implemented in predetermined switching nodes or in an intelligent network.

## Revendications

1. Procédé pour l'établissement d'au moins une deuxième communication (20, 40, 50) sur un réseau de télécommunications, où une faible priorité est affectée au moins à une partie de la deuxième communication et au moins une partie de la communication regroupe une ligne, un canal ou plusieurs canaux ou plusieurs paquets ou cellules, avec les étapes de procédé suivantes:
a) enregistrement des données d'état du réseau et/ou de l'usager;
b) vérification afin d'établir si une première communication existe entre un premier (10; 100) et un deuxième usager (60; 110) avec au moins, en partie, une plus haute priorité;
**caractérisé en ce que**,
lorsqu'une première communication qui présente, au moins en partie, une plus haute priorité, a été établie, les étapes suivantes sont exécutées:
c) établissement d'au moins une deuxième communication (20, 40, 50) entre le premier (10; 100) et le deuxième usager (60; 110),
d) en fonction des données d'état du réseau et/ou de l'usager, au moins une partie de la deuxième communication (20, 40, 50) à faible priorité est établie ou l'établissement de la communication selon c) est interrompu, et les étapes e) et f) ne sont pas exécutées,
e) enregistrement de la priorité faible affectée à la deuxième communication,
f) transmission de données au moins sur la partie de la deuxième communication (20, 40, 50) à faible priorité vers le premier et/ou le deuxième usager.

2. Procédé selon la revendication 1, **caractérisé en ce que** les données d'état des usagers contiennent des numéros d'appel à différentes priorités et que les communications affectées aux numéros d'appel peuvent être établies avec la priorité correspondante.

3. Procédé selon l'une des revendications 1 ou 2, **caractérisé en ce que** les données d'état du réseau contiennent des durées d'utilisation, et que pendant les durées d'utilisation, au moins une partie de la deuxième communication peut être établie avec une priorité faible.

4. Procédé selon l'une des revendications 1 à 3, **caractérisé en ce que** les données d'état du réseau contiennent des valeurs de seuil afférentes au degré d'utilisation du plan interurbain (40) ou des noeuds de commutation (30, 50; 105, 115) du réseau de télécommunications et que, au moins la partie de la deuxième communication établie avec une faible priorité est établie ou que des tentatives d'établissement d'une communication avec au moins une partie à faible priorité sont interrompues quand les valeurs de seuil sont dépassées.

5. Procédé selon l'une des revendications 1 à 4, **caractérisé en ce que** le réseau de télécommunications est un réseau numérique, en particulier un réseau ISDN, et que chaque communication regroupe plusieurs canaux d'utilisation et/ou de commande, auquel cas une priorité plus haute est affectée à un canal et une faible priorité est affectée au moins à un autre canal.

6. Procédé selon l'une des revendications 1 à 4, **caractérisé en ce que** le réseau de télécommunications est un réseau numérique à commutation par paquets, en particulier un réseau ATM, et que chaque communication est occupée par plusieurs paquets ou cellules, dont certains paquets ou certaines cellules prédéterminés possèdent une priorité haute tandis qu'une faible priorité est affectée aux autres.

7. Procédé selon l'une des revendications 1 à 6, **caractérisé en ce que** les données d'état du réseau ou de l'usager et les priorités affectées aux communications sont enregistrées dans des noeuds de commutation prédéterminés, une base de données centrale et/ou un réseau intelligent.

8. Dispositif pour la commande par priorité de l'établissement d'une communication sur un réseau de télécommunications, en particulier pour l'exécution d'un procédé selon l'une des revendications 1 à 7, qui regroupe
- un premier dispositif d'enregistrement pour la mémorisation de données d'état du réseau et/ou de l'usager, en particulier de durées d'utilisation et de paramètres de charge du réseau et les priorités affectées au numéro d'appel d'un usager, et
- une unité de commande programmable,
**caractérisé en ce que**
- un deuxième dispositif d'enregistrement pour la mémorisation des priorités des communications établies est prévu, et
- l'unité de commande programmable peut établir, sur la base des données d'état du réseau et/ou de l'usager, une communication (20, 40, 70; 102, 42, 112) entre deux usagers (10, 60; 100, 110) au moins en partie avec une faible priorité, le dispositif de commande programmable étant conçu de manière à ce que celui-ci, avant l'établissement d'une communication à faible priorité avec un usager, interroge le deuxième dispositif d'enregistrement afin de déterminer si une communication à priorité plus haute existe déjà avec le même usager.

9. Procédé selon la revendication 8, **caractérisé en ce que** ce dispositif est mis en oeuvre dans des noeuds de commutation prédéterminés ou un réseau intelligent.
